# EUROPEAN PATENT SPECIFICATION

(11) **EP 0 565 055 B1**
(45) Date of publication and mention of the grant of the patent: **11.02.1998**
(21) Application number: 93105691.5
(22) Date of filing: 06.04.1993
(51) Int. Cl.: A01F 15/07

(54) **Wrapping device mounted on the front loader of a tractor**
Einwickelvorrichtung befestigt an einer Traktorfrontladeeinrichtung
Dispositif d'emballage monté sur une chargeuse frontale

(30) Priority: 06.04.1992 FI 920282 U
(43) Date of publication of application: 13.10.1993
(73) Proprietor: NHK-KESKUS OY, 13110 Hämeenlinna (FI)
(72) Inventor: Mikkola, Pekka, SF-03850 Pusula (FI); Korhonen, Onni, SF-00760 Helsinki (FI)
(74) Representative: Zipse + Habersack

(56) References cited:
- EP-A- 0 234 763
- EP-A- 0 274 026
- EP-A- 0 394 011

## Description

The present invention relates to a wrapping machine in accordance with the preamble of claim 1, mounted on the front loader of a tractor for the wrapping of a fodder bale, e.g. a bale of hay or straw, with plastic.

In prior art, wrapping machines mounted on the front loader of a tractor for the wrapping of a fodder bale with plastic are known. In a solution known from EP-A-0 394 011 the wrapping machine is with a lower frame part fixedly mounted on the front loader of a tractor, and an upper frame part carrying a bale rolling device and a bale pressing device is tiltably hinged to the forward end of the lower frame part so that it can be tilted on said lower frame part through about 90° between a pick-up position and a horizontal wrapping position. With this structure of the wrapping machine the bale remains at a long distance from the fixing point of the machine on the front loader. Therefore, a heavy bale produces a large bending moment at the fixing point because of the long lever arm of the force. This leads to a strong and heavy structure, which is a very serious drawback. A heavy construction also causes compaction of the surface soil of the fields. In practice, previously known machines are only usable when mounted on the rear hitch system of a tractor, which means that aligning the lifting means of the machine with a bale is an operation requiring time and accuracy.

The object of the present invention is to eliminate the drawbacks mentioned and to achieve a versatile machine for wrapping a fodder bale with plastic and for the handling of bales that is reliable in operation and easy to use.

The invention has been described in the appended patent claims.

The wrapping machine of the invention has the advantage that the distance of the centre of gravity of the machine as well as that of the bale is reduced by about one meter as compared to previously known machines. The invention allows extending the machine even between the lifting arms of the front loader. Since the machine is very light, weighing only 280 kg (other known machines weigh over 615 kg), it can be effectively used as an accessory to a front loader. Another advantage is that the machine can lift the fodder bale onto a wrapping table, wrap it and then lower it without changing the height of the arms of the front loader, thus allowing the bales to be quickly and easily picked up. The wrapping table of the wrapping machine of the invention can be provided with belts to ensure successful wrapping. The wrapping machine can also be used for the heaping of bales in an upright position and for moving them from one place to another, and, by using an accessory, for opening and cleaving them before being served as fodder to cattle. The machine of the invention can be complemented with accessories.

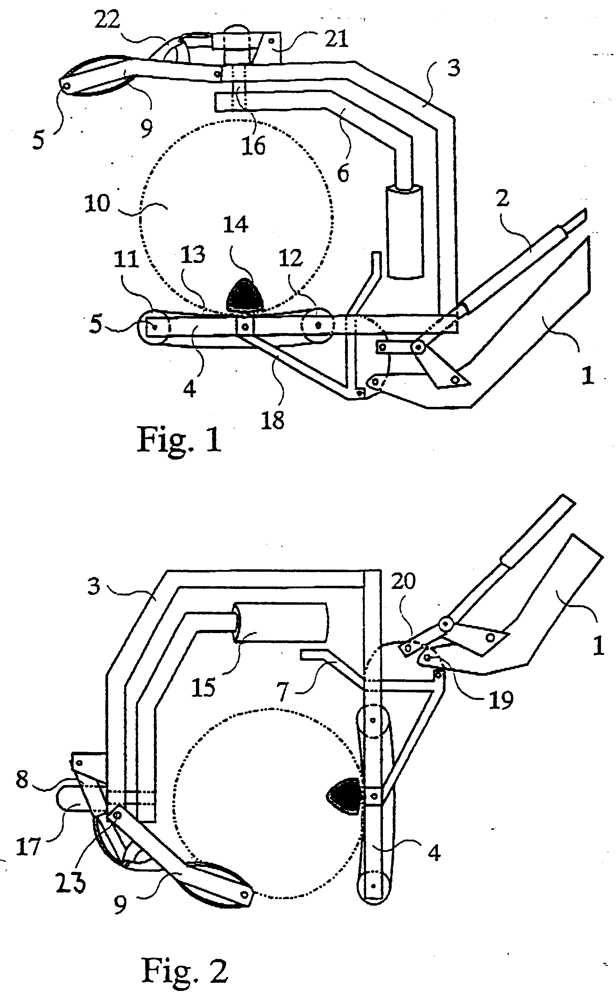

In the following, the invention is described by the aid of an example by referring to the attached drawings, in which
- Figure 1: presents the machine of the invention in the horizontal plane in lateral view, and
- Figure 2: presents a lateral view of the machine in a situation where it has been turned through 90° by the front loader mechanism and a bale has been taken from the ground into the wrapping machine.

The wrapping machine is mounted between the lifting arms of a front loader 1. It is so hinged that it can be turned forwards through at least 90° and back to its normal position by means of the cylinder 2 used to turn the bucket of the front loader.

The wrapping machine consists of an upper frame part 3 and a lower frame part 4 fixedly joined together. The lower frame part is provided with two rollers 11 and 12 supported by their ends by bearings mounted in the frame part 4, with a belt 13 laid over the rollers to rotate the bale. One of the rollers is a driving roller 12 rotated by a hydraulic motor (not shown in the figure), while the other roller 11 rotates freely because of the friction caused by the belt 13. The belt 13 causes the fodder bale 10 to roll. Mounted on either side of the wrapping machine is a conical roller 14 to prevent the bale from sliding off the rolling belt 13.

Fixed to the lower frame part 4 is a supporting frame 18 with mounting lugs, by means of which the wrapping machine is turnably attached to the front loader 1 by joint 19 and to the cylinder 2 by joint 20. Mounted with a joint on the lower frame part 4 is a means 7 for cutting and holding a plastic roll 15. This cutting and holding means 7 can be hydraulically turned to a vertical or a horizontal position. The figures show it in the vertical position. The free end of the lower frame part 4 is provided with a fixing element 5 for possible accessories.

The wrapping arm 6 has a curved shape of the same form with the upper frame part 3 so that it can turn horizontally about its vertical joint 16 without hitting the frame part 3. The wrapping arm 6 is rotated by a hydraulic motor 17 mounted on the upper end of the upper frame part 3. Placed in a vertical position at the lower end of the wrapping arm 6 is a roll 15 of plastic which is rotated around the fodder bale 10 to be wrapped.

Attached with a joint 23 to the extremity of the upper or free end of the upper frame part 3 is a pressing device 9, which in its high position rises somewhat above the upper end of the upper frame part 3 and is therefore in a horizontal position with a slight upward inclination. The upper end of the upper frame part 3 is provided with a lug 21 to which a hydraulic cylinder 8 is attached by its one end by means of a joint. The piston part of the hydraulic cylinder 8 is attached with a joint to a lug 22 on the pressing device 9. The pressing device 9 presses a bale from the field against the rolling belt 13 and keeps it firmly on the belt 13 while the machine is being turned back into its horizontal wrapping position. After this, the pressing device 9 is turned back into its high position, which is some way up from the horizontal plane to provide enough headroom for the wrapping arm 6 when the latter is rotated around the bale 10. The free end of the pressing device 9 is also provided with a fixing element 5 for accessories.

## Claims

1. Wrapping machine mountable on the front loader (1) of a tractor for the wrapping of a fodder bale (10), e.g. a bale of hay or straw, with a plastic foil, said machine comprising
- an upper frame part (3) and a lower frame part (4) attachable to the front loader (1) and forming said frame (3,4);
- a bale rolling device (11,14);
- a wrapping arm (6) and
- a pressing device (9) being mounted with a joint on the frame (3,4) so as to press the fodder bale (10) against the bale rolling device (11,14),
**characterized** in that
- the upper frame part (3) and the lower frame part (4) are fixedly joined together, and
- that the frame (3,4) is provided to be hinged around a horizontal axis (19) to the front loader (1) so that the frame (3,4) can be turned forwards through at least 90° to a pick-up position and back to its horizontal wrapping position by means of the cylinder (2) used otherwise to turn the bucket of the front loader.

2. The wrapping machine according to claim 1,
**characterized** in that
the joint (23) for the mounting of the pressing device (9) is arranged at the free end of the upper frame part (3).

3. The wrapping machine according to claim 2,
**characterized** in that
an actuation device (8) is provided for pivoting the pressing device (9) around the joint (23).

## Patentansprüche

1. Einwickelvorrichtung zum Einwickeln eines Trockenfutter-Ballens (10), beispielsweise eines Heu- oder Strohballens, in eine Kunststoffolie, die an der Frontladeeinrichtung (1) einer Landmaschine befestigbar ist, mit einem oberen Rahmenteil (3) und einem unteren Rahmenteil (4), die an der Frontladeeinrichtung (1) befestigbar sind und den Rahmen (3, 4) bilden; einer Ballen-Rolleinrichtung (11, 14); einem Einwickelarm (6) und einer Preßeinrichtung (9), die mit einer Verbindung an dem Rahmen (3, 4) angeordnet ist, um den Trockenfutter-Ballen (10) gegen die Ballen-Rolleinrichtung (11, 14) zu pressen, dadurch gekennzeichnet, daß das obere Rahmenteil (3) und das untere Rahmenteil (4) fest miteinander verbunden sind, und daß der Rahmen (3, 4) schwenkbar um eine horizontale Achse (19) an der Frontladeeinrichtung (1) angeordnet ist, so daß der Rahmen (3, 4) mittels eines Zylinders (2), der sonst zur Verschwenkung der Lademulde der Frontladeeinrichtung verwendet wird, nach vorne um einen Winkel von mindestens 90° in eine Aufnahmeposition und zurück in seine horizontale Einwickelposition verschwenkt werden kann.

2. Einwickelvorrichtung nach Anspruch 1, dadurch gekennzeichnet, daß die Verbindung (23) für die Befestigung der Preßeinrichtung (9) am freien Ende des oberen Rahmenteils (3) angeordnet ist.

3. Einwickelvorrichtung nach Anspruch 2, dadurch gekennzeichnet, daß zur Drehung der Preßeinrichtung (9) um die Verbindung (23) herum eine Betätigungsvorrichtung (8) vorgesehen ist.

## Revendications

1. Machine d'emballage montable sur la chargeuse frontale (1) d'un tracteur pour l'enveloppement d'une balle de fourrage (10), par exemple une balle de foin ou de paille, avec une feuille de matière plastique, ladite machine comprenant :
une partie supérieure de châssis (3) et une partie inférieure de châssis (4) attachables à la chargeuse frontale (1) et constituant ledit châssis (3,4) ;
un dispositif de mise en roulement de balle (11,14) ;
un bras d'enveloppement (6) ; et
un dispositif de pressage (9) monté de façon articulée sur le châssis (3,4) de façon à presser la balle de fourrage (10) contre le dispositif de mise en roulement de balle (11,14) ; caractérisée en ce que :
la partie supérieure de châssis (3) et la partie inférieure de châssis (4) sont reliées de façon fixe l'une à l'autre ; et
le châssis (3,4) peut pivoter autour d'un axe horizontal (19) par rapport à la chargeuse frontale (1) de sorte qu'on peut faire pivoter le châssis (3,4) vers l'avant d'au moins 90 degrés, à une position de ramassage et le ramener à sa position horizontale d'enveloppement, au moyen du vérin (2) qui sert normalement à faire pivoter le godet de la chargeuse frontale.

2. Machine d'emballage suivant la revendication 1, caractérisée en ce que l'articulation (23) pour le montage du dispositif de pressage (9) est prévue à l'extrémité libre de la partie supérieure de châssis (3).

3. Machine d'emballage suivant la revendication 2, caractérisée en ce qu'un dispositif de manoeuvre (8) est prévu pour faire pivoter le dispositif de pressage (9) autour de l'articulation (23).
